(19) Europäisches Patentamt
European Patent Office
Office européen des brevets

(11) EP 1 737 299 B1

(12) EUROPÄISCHE PATENTSCHRIFT

(45) Veröffentlichungstag und Bekanntmachung des Hinweises auf die Patenterteilung:
**24.10.2007 Patentblatt 2007/43**

(21) Anmeldenummer: **05716503.7**

(22) Anmeldetag: **02.04.2005**

(51) Int Cl.:
***A01N 47/12*** *(2006.01)*

(86) Internationale Anmeldenummer:
**PCT/EP2005/003462**

(87) Internationale Veröffentlichungsnummer:
**WO 2005/099454 (27.10.2005 Gazette 2005/43)**

(54) **FUNGIZIDE WIRKSTOFFKOMBINATIONEN**

FUNGICIDAL ACTIVE SUBSTANCE COMBINATIONS

COMBINAISONS DE PRINCIPES ACTIFS FONGICIDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.04.2004 DE 102004017981**

(43) Veröffentlichungstag der Anmeldung:
**03.01.2007 Patentblatt 2007/01**

(73) Patentinhaber: **Bayer CropScience Aktiengesellschaft**
**40789 Monheim (DE)**

(72) Erfinder:
- **SEITZ, Thomas**
  **40764 Langenfeld (DE)**
- **ECKSTEIN, Klaus**
  **51399 Burscheid (DE)**
- **LATORSE, Marie-Pascale**
  **F-69490 St. Romain De Popey (FR)**

(56) Entgegenhaltungen:
**EP-A- 0 610 764** **US-A- 4 698 334**

- **DATABASE CA [Online] CHEMICAL ABSTRACTS SERVICE, COLUMBUS, OHIO, US; BUGARET, Y.: "Effect of treatments applied against dead-arm disease and downy mildew on the fungal microflora of vine shoots" XP002342397 gefunden im STN Database accession no. 1986: 30289 & BCPC MONOGRAPH , 31(FUNGIC. CROP PROT., VOL. 2), 403-6 CODEN: MBCCDO; ISSN: 0306-3941, 1985,**
- **DATABASE CA [Online] CHEMICAL ABSTRACTS SERVICE, COLUMBUS, OHIO, US; LAFON, R. ET AL: "Results of 5-year experiments to control the most important fungus diseases of grapes with the combination of phosethyl Al and folpet in France" XP002342398 gefunden im STN Database accession no. 1984:585960 & WEIN-WISSENSCHAFT , 39(4), 226-42 CODEN: WEWIAW; ISSN: 0375-8818, 1984,**
- **DATABASE CA [Online] CHEMICAL ABSTRACTS SERVICE, COLUMBUS, OHIO, US; BUGARET, Y. ET AL: "Improvement in black rot (Phomopsis viticola Sacc.) treatments applied after bud pushing, a phosethyl-Al-folpel combination on grape vines" XP002342399 gefunden im STN Database accession no. 1981:527247 & PHYTIATRIE-PHYTOPHARMACIE , 29(1), 45-56 CODEN: PHPHA6; ISSN: 0031-8876, 1980,**
- **DATABASE CA [Online] CHEMICAL ABSTRACTS SERVICE, COLUMBUS, OHIO, US; CHALANDON, A. ET AL: "Control of vine downy mildew with formulations of aluminum tris(ethyl phosphonate)" XP002342400 gefunden im STN Database accession no. 1980:632494 & BRITISH CROP PROTECTION CONFERENCE--PESTS AND DISEASES, PROCEEDINGS , (2), 347-52 CODEN: PBCDDQ; ISSN: 0144-1612, 1979,**
- **DATABASE CA [Online] CHEMICAL ABSTRACTS SERVICE, COLUMBUS, OHIO, US; NUMIC, REFIK: "Results of a study of the systemic fungicide Mikal in control of Plasmopara viticola (Be et C.) Barlese et de Toni" XP002342401 gefunden im STN Database accession no. 1982:99287 & ZASTITA BILJA , 32(158), 335-8 CODEN: ZABIAY; ISSN: 0372-7866, 1981,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 737 299 B1

- **DATABASE CA [Online] CHEMICAL ABSTRACTS SERVICE, COLUMBUS, OHIO, US; CHAZALET, M. ET AL: "Results of experiments using ethyl phosphites against various vine diseases" XP002342402 gefunden im STN Database accession no. 1978:184442 & PHYTIATRIE-PHYTOPHARMACIE , 26(1), 41-54 CODEN: PHPHA6; ISSN: 0031-8876, 1977,**
- **DATABASE CA [Online] CHEMICAL ABSTRACTS SERVICE, COLUMBUS, OHIO, US; MARAIS, P. G. ET AL: "Trials with systemic fungicide formulations for the control of grapevine downy mildew" XP002342403 gefunden im STN Database accession no. 1979:98424 & PHYTOPHYLACTICA , 10(3), 89-91 CODEN: PPPMA9; ISSN: 0370-1263, 1978,**
- **DATABASE CA [Online] CHEMICAL ABSTRACTS SERVICE, COLUMBUS, OHIO, US; STENZEL, K. ET AL: "SZX 722: a novel systemic oomycete fungicide" XP002342404 gefunden im STN Database accession no. 1999:517213 & BRIGHTON CROP PROTECTION CONFERENCE--PESTS AND DISEASES , (VOL. 2), 367-374 CODEN: BCPDED; ISSN: 0955-1506, 1998,**

## Beschreibung

Die Erfindung betrifft Wirkstoffkombinationen, die aus einem Valinamid-Derivat, einem Phosphonat und Folpet bestehen und sehr gut zur Bekämpfung von phytopathogenen Pilzen geeignet sind.

Es ist bereits bekannt, daß Valinamid-Derivate fungizide Eigenschaften aufweisen (vgl. EP-A 472 996). Die fungiziden Eigenschaften von Iprovalicarb und Benthiavalicarb sind ebenfalls bekannt (Pesticide Manual, 2003, The British Crop Protection Council, Eintrag 68, 471). Die Wirksamkeit dieser Verbindungen sind gut, lassen aber bei niedrigen Aufwandmengen in manchen Fällen zu wünschen übrig.

Ferner ist bekannt, dass Phosphonsäure und deren Derivate (Phosphonate), wie Fosetyl-A1, fungizide Eigenschaften aufweisen (Pesticide Manual, 2003, The British Crop Protection Council). Auch die Wirkung dieser Stoffe ist bei niedrigen Aufwandmengen nicht immer ausreichend.

Ferner ist bekannt, dass Folpet fungizide Eigenschaften aufweist (Pesticide Manual, 2003, The Britisch Crop Protection Council, Eintrag 400). Die Wirksamkeit dieses Stoffes ist gut, lässt aber bei niedrigen Aufwandmengen in manchen Fällen zu wünschen übrig.

Schließlich ist bekannt, dass Valinamid-Derivate der Formel (I) in Kombination mjt anderen Wirkstoffen eingesetzt werden können (vgl. EP-A-610 764, EP-A-944 318, WO 00/030440, WO 00/045638). Die Wirkung dieser Mischungen ist gut, lässt aber in manchen Fällen zu wünschen übrig.

Da sich zudem die ökologischen und ökonomischen Anforderungen an moderne Fungizide laufend erhöhen, beispielsweise das Wirkspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Fungizide zu entwickeln, die zumindest in Teilbereichen Vorteile gegenüber den bekannten aufweisen.

Gegenstand der Erfindung sind Wirkstoffkombinationen, die die genannten Aufgaben zumindest in Teilaspekten lösen.

Es wurde gefunden, dass Wirkstoffkombinationen, enthaltend als Wirkstoffe
ein Valinamid-Derivat der Formel (I),

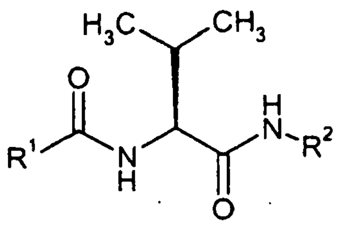

(I)

in welcher

$R^1$ für iso-Propoxy oder Methylsulfonyl steht und
$R^2$ für eine der folgenden Gruppen steht

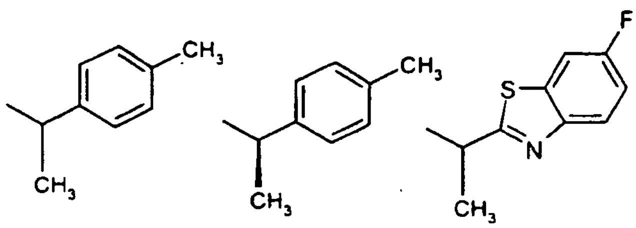

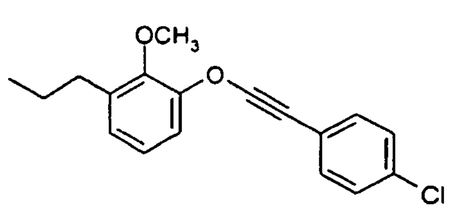

und Phosphonsäure oder ein Phosphonat der Formel II,

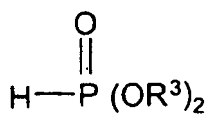

(II)

wobei

$R^3$ gleich oder verschieden für H, $^1/_nM^{n+}$ oder ($C_1$-$C_4$)-Alkyl und
M für ein Kation steht;

und Folpet der Formel (III)

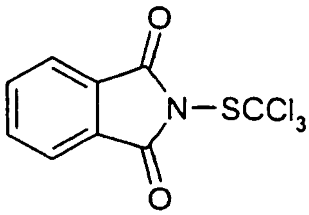

(III)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Ein bevorzugtes Valinamid-Derivat der Formel (I) ist

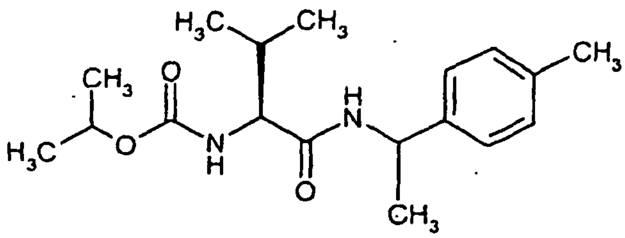

(I-1) (Iprovalicarb)

Ein weiterhin bevorzugtes Valinamid-Derivat der Formel (I) ist

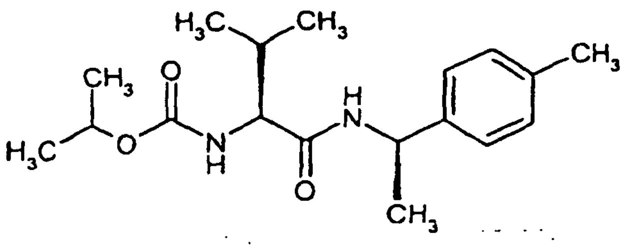

(I-2)

Ein weiterhin bevorzugtes Valinamid-Derivat der Formel (I) ist

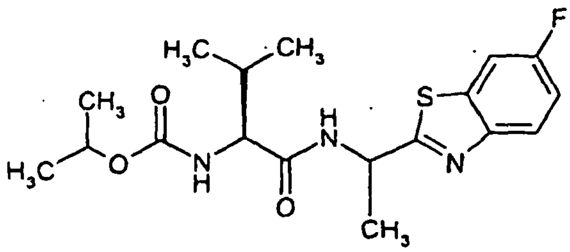

(I-3) (Benthiavalicarb)

Ein weiterhin bevorzugtes Valinamid-Derivat der Formel (I) ist

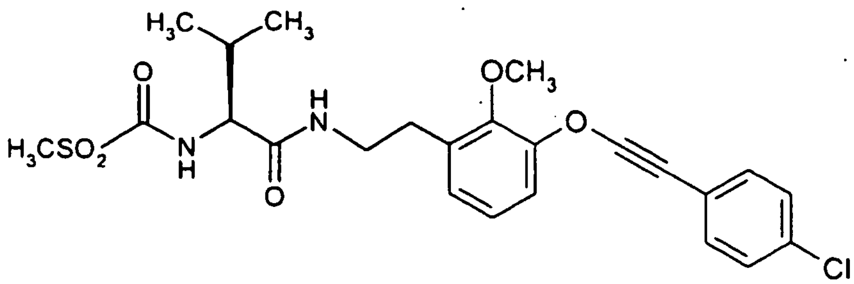

(I-4)

Bevorzugte Fungizide der Formel II sind neben Phosphonsäure $HP(O)(OH)_2$), (IIa), deren Salze der Formel IIb,

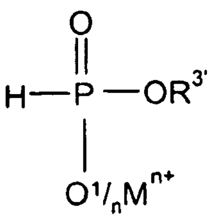

IIb

wobei

- $R^{3'}$ H oder $^1/_nM^{n+}$ und
- M ein anorganisches oder organisches Kation, vorzugsweise Al oder ein Alkali- oder Erdalkalimetall, besonders bevorzugt Na, K oder Al, bedeutet,

oder gemischte Estersalze der Formel IIc,

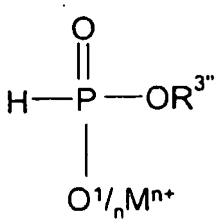

IIc

wobei

- $R^{3''}$ $(C_1-C_4)$-Alkyl, vorzugsweise $C_2H_5$, und
- M ein anorganisches oder organisches Kation, vorzugsweise Al oder ein Alkali- oder Endalkalimetall, besonders

bevorzugt Al, Na, oder K bedeutet.

Ganz besonders bevorzugt sind die Verbindungen

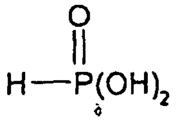
II-1

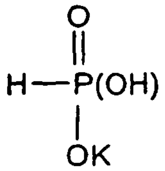
II-2

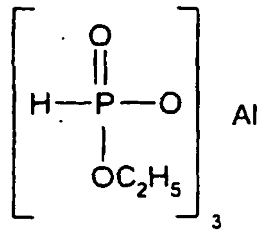
II-4

und

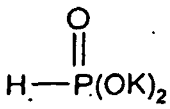
II-3

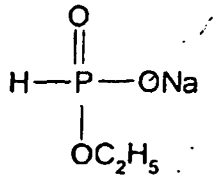
II-5

insbesondere die Verbindung II-4 (Fosetyl-Al).

Phosphonsäure wird in der Literatur auch als phosphorige Säure (eigentlich Tautomer der Phosphonsäure, P $(OH)_3$) bezeichnet, ihre Salze entsprechend als (sekundäre) Phosphite.

Die aufgeführten Wirkstoffe, insbesondere Iprovalicarb, Benthiavalicarb. Phosphonsäure, deren Mono- und Dikalium-salz, Fosetyl-A1 und Folpet sind kommerziell erhältlich. Hinweise zu Bezug auf gegebenenfalls Synthese finden sich in C.D.S. Tonlin, The Pesticidal Manual, 13. Auflage, British CropProtection Council, Farnham 2003 und der darin zitierten Literatur.

Bevorzugte Wirkstoffkombinationen aus Wirkstoffen der Formeln I, II und III sind die im folgenden aufgeführten: (a) I-1 / II-1 / III, (b) I-1 / II-2 / III, (c) I-1 / II-3 / III, (d) I-1 / II-4 / III, (e) I-1 / II-5 / III, (f) I-2 / II-1 / III, (g) I-2 / II-2 / III, (h) I-2 / II-3 / III, (i) I-2 / II-4 / III, (j) I-2 / II-5 / III, (k) I-3 / II-1 / III, (1) I-3 / II-2 / III, (m) 1-3 / II-3 / III, (n) I-3 / II-4 / III, (o) I-3 / II-5 / III, (p) I-4 / II-1 / III, (q) I-4 / II-2 / III, (r) I-4 / II-3 / III, (s) I-4 / II-4 / III, (t) I-4, / II-5 / III.

Davon sind besonders bevorzugt die Kombinationen a, b, c, de, e, k, l, m, n und o, insbesondere bevorzugt ist die Kombination d (Iprovalicarb, Fosethyl-A1 und Folpet).

Wenn die Wirkstoffe in den erfindungsgemäßen Wirkstoffkombinationen in bestimmten Gewichtsverhältnissen vorhanden sind, zeigt sich ein synergistischer Effekt besonders deutlich. Jedoch können die Gewichtsverhältnisse der Wirkstoffe in den Wirkstoffkombinationen in einem relativ großen Bereich variiert werden. Die Gewichtsverhälntisse der Verbindungen der Formeln (I) : (II) oder (II)a: (III) können beispielsweise im Bereich zwischen 1 : 100 : 50 und 1 : 2,5 : 1,5 liegen. Bevorzugt liegen die Gewichtsverhältnisse der Verbindungen der Formeln (I) : (II) oder (II)a: (III) im Bereich zwischen 1 : 12 : 6 und 1 : 25 : 12.

Die erfindungsgemäßen Wirkstoffe weisen eine starke mikrobizide Wirkung auf und können zur Bekämpfung von unerwünschten Mikroorganismen, wie Pilzen und Bakterien, im Pflanzenschutz und im Materialschutz eingesetzt werden.

Fungizide lassen sich im Pflanzenschutz beispielsweise zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz beispielsweise zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:

Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;

Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder Pseudoperonospora cubensis;
Plasmopara-Arten, wie beispielsweise Plasmopara viticola;
Bremia-Arten, wie beispielsweise Bremia lactucae;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea (Konidienform: Drechslera, Syn: Helminthosporium);
Cochliobolus-Arten, wie beispielsweise Cochliobolus sativus (Konidienform: Drechslera, Syn: Helminthosporium);
Uromyces-Arten, wie beispielsweise Uromyces appendiculatus;
Puccinia-Arten, wie beispielsweise Puccinia recondita;
Sclerotinia-Arten, wie beispielsweise Sclerotinia sclerotiorum;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Altemaria-Arten, wie beispielsweise Alternaria brassicae;
Pseudocercosporella-Arten, wie beispielsweise Pseudocercosporella herpotrichoides;
Phakopsora-Arten, wie Phakopsora pachyrhizi und Phakopsora meibomiae.

Die erfindungsgemäßen Wirkstoffe weisen auch eine sehr gute stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze und Bakterien zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 10 Tage, vorzugsweise 1 bis 7 Tage nach der Behandlung der Pflanzen mit den Wirkstoffen.

Die erfindungsgemäßen Wirkstoffkombinationen eignen sich besonders gut zur Bekämpfung Phytophthora infestans und Plasmopara viticola.

Die erfindungsgemäßen Wirkstoffkombinationen eignen sich besonders gut zur Verwendung im Weinbau.

Die erfindungsgemäßen Wirkstoffkombinationen eignen sich auch besonders gut zur Verwendung im Gemüseanbau.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden,

wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA.(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GA.RD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die erfindungsgemäße Behandlung der Pflanzen und Pflanzenteile mit den Wirkstoffen erfolgt direkt oder durch

Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen.

**Fungizide:**

2-Phenylphenol; 8-Hydroxyquinoline sulfate; Acibenzolar-S-methyl; Aldimorph; Amidoflumet; Ampropylfos; Ampropylfos-potassium; Andoprim; Anilazine; Azaconazole; Azoxystrobin; Benalaxyl; Benalaxyl-M; Benodanil; Benomyl; Benzamacril; Benzamacril-isobutyl; Bilanafos; Binapacryl; Biphenyl; Bitertanol; Blasticidin-S; Boscalid; Bromuconazole; Bupirimate; Buthiobate; Butylamine; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; Clozylacon; Cyazofamid; Cyflufenamid; Cymoxanil; Cyproconazole; Cyprodinil; Cyprofuram; Dagger G; Debacarb; Dichlofluanid; Dichlone; Dichlorophen; Diclocymet; Diclomezine; Dicloran; Diethofencarb; Difenoconazole; Diflumetorim; Dimethirimol; Dimethomorph; Dimoxystrobin; Diniconazole; Diniconazole-M; Dinocap; Diphenylamine; Dipyrithione; Ditalimfos; Dithianon; Dodine; Drazoxolon; Edifenphos; Epoxiconazole; Ethaboxam; Ethirimol; Etridiazole; Famoxadone; Fenamidone; Fenapanil; Fenarimol; Fenbuconazole; Fenfuram; Fenhexamid; Fenitropan; Fenoxanil; Fenpiclonil; Fenpropidin; Fenpropimorph; Ferbam; Fluazinam; Flubenzimine; Fludioxonil; Flumetover; Flumorph; Fluoromide; Fluoxastrobin; Fluquinconazole; Flurprimidol; Flusilazole; Flusulfamide; Flutolanil; Flutriafol; Fuberidazole; Furalaxyl; Furametpyr; Furcarbanil; Furmecyclox; Guazatine; Hexachlorobenzene; Hexaconazole; Hymexazol; Imazalil; Imibenconazole; Iminoctadine triacetate; Iminoctadine tris(albesilate); Iodocarb; Ipconazole; Iprobenfos; Iprodione; Irumamycin; Isoprothiolane; Isovaledione; Kasugamycin; Kresoxim-methyl; Mancozeb; Maneb; Meferimzone; Mepanipyrim; Mepronil; Metalaxyl; Metalaxyl-M; Metconazole; Methasulfocarb; Methfuroxam; Metiram; Metominostrobin; Metsulfovax; Mildiomycin; Myclobutanil; Myclozolin; Natamycin; Nicobifen; Nitrothal-isopropyl; Noviflumuron; Nuarimol; Ofurace; Orysastrobin; Oxadixyl; Oxolinic

acid; Oxpoconazole; Oxycarboxin; Oxyfenthiin; Paclobutrazol; Pefurazoate; Penconazole; Pencycuron; Phosdiphen; Phthalide; Picoxystrobin; Piperalin; Polyoxins; Polyoxorim; Probenazole; Prochloraz; Procymidone; Propamocarb; Propanosinesodium; Propiconazole; Propineb; Proquinazid; Prothioconazole; Pyraclostrobin; Pyrazophos; Pyrifenox; Pyrimethanil; Pyroquilon; Pyroxyfur; Pyrrolnitrine; Quinconazole; Quinoxyfen; Quintozene; Silthiofam, Simeconazole; Spiroxamine; Sulfur; Tebuconazole; Tecloftalam; Tecnazene; Tetcyclacis; Tetraconazole; Thiabendazole; Thicyofen; Thifluzamide; Thiophanatemethyl; Thiram; Tioxymid; Tolclofos-methyl; Tolylfluanid; Triadimefon; Triadimenol; Triazbutil; Triazoxide; Tricyclamide; Tricyclazole; Tridemorph; Trifloxystrobin; Triflumizole; Triforine; Triticonazole; Uniconazole; Validamycin A; Vinclozolin; Zineb; Ziram; Zoxamide; (2S)-N-[2-[4-[[3-(4-Chlorphenyl)-2-propnyl]oxy]-3-methoxyphenyl] ethyl]-3-methyl-2-[(methylsulfonyl)amino]-butanamid; 1-(1-Naphthalinyl)-1H-pyrrol-2,5-dion; 2,3,5,6-Tetrachlor-4-(methyl-sulfonyl)-pyridin; 2-Amino-4-methyl-N-phenyl-5-thiazolcarboxamid; 2-Chlor-N-(2,3-dihydro-1,1,3-trimethyl-1H-inden-4-yl)-3-pyridincarboxamid; 3,4,5-Trichlor-2,6-pyridindicarbonitril; Actinovate; cis-1-(4-Chlorphenyl)-2-(1H-1,2,4-triazol-1-yl)-cycloheptanol; Methyl 1-(2,3-diyhdro-2,2-dimethyl-1H-inden-1-yl)-1H-imidazol-5-carboxylat; Monokaliumcarbonat; N-(6-Methoxy-3-pyridinyl)-cyclopropancarboxamid; N-Butyl-8-(1,1 -dimethylethyl)-1-oxaspiro-[4.5]decan-3-amin; Natriumtetracarbonat;
sowie Kupfersalze und -zubereitungen, wie Bordeaux Mischung; Kupferhydroxid, Kupfernaphthenat; Kupferoxychlorid; Kupfersulfat; Cufraneb; Kupferoxid; Mancopper; Kupferoxin.

**Bakterizide:**

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

**Insektizide / Akarizide / Nematizide:**

*1. Acetylcholinesterase (AChE) Inhibitoren*

1.1 Carbamate (z.B. Alanycarb, Aldicarb, Aldoxycarb, Allyxycarb, Aminocarb, Azamethiphos, Bendiocarb, Benfuracarb, Bufencarb, Butacarb, Butocarboxim, Butoxycarboxim, Carbaryl, Carbofuran, Carbosulfan, Chloethocarb, Coumaphos, Cyanofenphos, Cyanophos, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Triazamate, Trimethacarb, XMC. Xylylcarb)
1.2 Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion)

*2. Natrium-Kanal-Modulatoren / Spannungsabhängige Natrium-Kanal-Blocker*

2.1 Pyrethroide (z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (IR-Isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (IR-isomer), Tralomethrin, Transfluthrin, ZXI 8901, Pyrethrins (pyrethrum))

2.2 Oxadiazine (z.B. Indoxacarb)

*3. Acetylcholin-Rezeptor-Agonisten-Antagonisten*

3.1 Chloronicotinyle/Neonicotinoide (z.B. Acetamiprid, Clothianidin, Dinotefuran, Imidacloprid, Nitenpyram, Nithiazine, Thiacloprid, Thiamethoxam)

3.2 Nicotine, Bensultap, Cartap

*4. Acelylcholin-Rezeptor-Modulatoren*

4.1 Spinosyne (z.B. Spinosad)

*5. GABA-gesteuerte Chlorid-Kanal-Antagonisten*

5.1 Cyclodiene Organochlorine (z.B. Camphechlor, Chlordane, Endosulfan, Gamma-HCH, HCH, Heptachlor, Lindane, Methoxychlor

5.2 Fiprole (z.B. Acetoprole, Ethiprole, Fipronil, Vaniliprole)

*6. Chlorid-Kanal-Aktivatoren*

6.1 Mectine (z.B. Abamectin, Avermectin, Emamectin, Emamectin-benzoate, Ivermectin, Milbemectin, Milbemycin)

*7. Juvenilhormon-Mimetika*

(z.B. Diofenolan, Epofenonane, Fenoxycarb, Hydroprene, Kinoprene, Methoprene, Pyriproxifen, Triprene)

*8. Ecdysonagonisten/disruptoren*

8.1 Diacylhydrazine (z.B. Chromafenozide, Halofenozide, Methoxyfenozide, Tebufenozide)

*9. Inhibitoren der Chitinbiosynthese*

9.1 Benzoylharnstoffe (z.B. Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron)

9.2 Buprofezin

9.3 Cyromazine

*10. Inhibitoren der oxidativen Phosphorylierung, ATP-Disruptoren*

10.1 Diafenthiuron

10.2 Organotine (z.B. Azocyclotin, Cyhexatin, Fenbutatin-oxide)

*11. Entkoppler der oxidativen Phoshorylierung durch Unterbrechung des H-Protongradienten*

11.1 Pyrrole (z.B. Chlorfenapyr)

11.2 Dinitrophenole (z.B. Binapacyrl, Dinobuton, Dinocap, DNOC)

*12. Site-1-Elektronentransportinhibitoren*

12.1 METI's (z.B. Fenazaquin, Fenpyroximate, Pyrimidifen, Pyridaben, Tebufenpyrad, Tolfenpyrad)

12.2 Hydramethylnone

- 12.3 Dicofol

*13. Site-II-Elektronentransportinhibitoren*

13.1 Rotenone

*14. Site-III-Elektronentransportinhibitoren*

14.1 Acequinocyl, Fluacrypyrim

*15. Mikrobielle Disruptoren der Insektendarmmembran*

Bacillus thuringiensis-Stämme

*16. Inhibitoren der Fettsynthese*

16.1 Tetronsäuren (z.B. Spirodiclofen, Spiromesifen)

16.2 Tetramsäuren [z.B. 3-(2,5-Dimethylphenyl)-8-methoxy-2-oxo-1-azaspiro[4,5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)]

*17. Carboxamide*

(z.B. Flonicamid)

*18. Oktopaminerge Agonisten.*

(z.B. Amitraz)

*19. Inhibitoren der Magnesium-stimulierten ATPase*

(z.B. Propargite)

*20. Phthalamide*

(z.B. $N^2$-[1,1-Dimethyl-2-(methylsulfonyl)ethyl]-3-iod-N'-[2-methyl-4-[1,2,2,2-tetrafluor-1-(trifluormethyl)ethyl] phenyl]-1,2-benzenedicarboxamide (CAS-Reg.-No.: 272451-65-7), Flubendiamide)

*21. Nereistoxin-Analoge*

(z.B. Thiocyclam hydrogen oxalate, Thiosultap-sodium)

*22. Biologika, Hormone oder Pheromone*

(z.B. Azadirachtin, Bacillus spec., Beauveria spec., Codlemone, Metarrhizium spec., Paecilomyces spec., Thuringiensin, Verticillium spec.)

*23. Wirkstoffe mit unbekannten oder nicht spezifischen Wirkmechanismen*

23.1 Begasungsmittel (z.B. Aluminium phosphide, Methyl bromide, Sulfuryl fluoride)

23.2 Selektive Fraßhemmer (z.B. Cryolite, Flonicamid, Pymetrozine)

23.3 Milbenwachstumsinhibitoren (z.B. Clofentezine, Etoxazole; Hexythiazox)

23.4 Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin,

ferner die Verbindung 3-Methyl-phenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Auch eine Mischung mit anderen bekannten Wirkstoffen, wie Herbiziden, Safenem bzw. Semiochemicals, oder mit Düngemitteln und Wachstumsregulatoren ist möglich.

Die Verbindungen (I), (II) und (III) können gleichzeitig, und zwar gemeinsam oder getrennt, oder nacheinander aufgebracht werden, wobei die Reihenfolge bei getrennter Applikation im Allgemeinen keine Auswirkung auf den Bekämpfungserfolg hat.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

- X den Wirkungsgrad beim Einsatz des Wirkstoffes A in einer Aufwandmenge von $\underline{m}$ g/ha bedeutet,
- Y den Wirkungsgrad beim Einsatz des Wirkstoffes B in einer Aufwandmenge von $\underline{n}$ g/ha bedeutet und
- E den Wirkungsgrad beim Einsatz der Wirkstoffe A und B in Aufwandmengen von $\underline{m}$ und $\underline{n}$ g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Eine weitere Methode zur Bestimmung von synergistischen Effekten bietet das Tammes-Modell (Neth. J. Plant Path. 70 (1964) 73-80), bei dem z.B. die theoretische Dosierung für einen Wirkungsgrad von 90% ermittelt und mit der tatsächlich notwendigen Dosierung verglichen wird.

Die Erfindung wird durch die folgenden Beispiele veranschaulicht. Die Erfindung ist jedoch nicht auf die Beispiele

limitiert.

**Beispiel:**

Synergistische protektive Wirkung einer Kombination von Iprovalicarb/ Folpet und Fosetyl-Al gegen *Plasmopara viticola* an Reben.

Die Mischung aus Iprovalicarb und Folpet wurde als kommerziell erhältliche WG-Formulierung (Melody Combi®, enthaltend 9 Gew. % Iprovalicarb und 56,25 Gew. % Folpet) eingesetzt.

Fosetyl-Al wurde als kommerzielle WG-Formulierung (Aliette®, enthaltend 80 Gew. % Fosetyl-Al) eingesetzt.

Zur Prüfung auf preventive Wirksamkeit wurde eine Spritzapplikation an jungen Weinpflanzen der Rebsorte Cabemet Sauvignon mit den Wirkstoffzubereitungen vorgenommen (Aufwandmenge 250 1 Spritzbrühe per Hektar). In der Wirkstoffzubereitung aus Iprovalicarb, Folpet und Fosetyl-Al betrug das Gew.- Verhältnis von Melody Combi® (Iprovalicarb/Folpet) zu Aliette (Fosetyl-Al) 1:12,5.

Nach 3 Tagen wurden die Pflanzen mit einer wässrigen Sporensuspension von *Plasmopara viticola* (ungefähr $10^5$ Sporen / ml) inokuliert. Danach wurden die Pflanzen für 7-Tage bei 20° C in gesättigter Atmosphäre inkubiert.

Anschließend erfolgte die Auswertung. Dabei bedeutet 0% einen Wirkungsgrad, der demjenigen der Kontrolle entspricht, während ein Wirkungsgrad von 100% bedeutet, dass kein Befall beobachtet wird.

Tabelle 1: Synergismus zwischen Iprovalicarb/Folpet und Fosetyl-Al nach Colby

| Aufwandmenge<br>Iprovalicarb/Folpet als Melody Combi®-WG(mg/l):<br>Fosetyl-Al als Aliette®-WG (mg/l) | 2<br>25 | 5<br>62,5 | 10<br>125 | 20<br>250 |
|---|---|---|---|---|
| Beobachteter Wirkungsgrad (%) | 10 | 67 | 88 | 97 |
| Berechneter Wirkungsgrad (%) | 9 | 40 | 89 | 91 |

Tabelle 2: Synergismus zwischen Iprovalicarb/Folpet und Fosetyl-A1 nach Tammes

| Verhältnis<br>Iprovalicarb/Folpet als Melody Combi®-WG(mg/1)<br>Fosetyl-A1 als Aliette®-WG (mg/l) | 1<br>12,5 | Iprovalicarb/ Folpet als Melody Combi ®-WG | Fosetyl-Al als Aliette ®-WG |
|---|---|---|---|
| Beobachtete Aufwandmenge für 90% Wirkungsgrad | 10<br>125 | 14,4 | 6907 |
| Berechnete Aufwandmenge für 90% Wirkungsgrad | 14<br>175 | - | - |

Beide Versuche bzw. Auswertungsmethoden belegen einen Synergismus zwischen Iprovalicarb / Folpet und Fosetyl-Al.

## Patentansprüche

**1.** Wirkstoffkombination, enthaltend
ein Valinamid-Derivat der Formel (I),

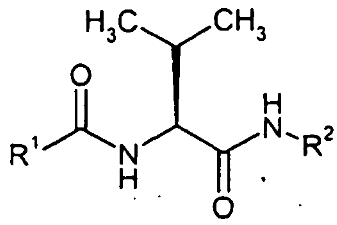

(I)

in welchem

$R^1$ für iso-Propoxy oder Methylsulfonyl steht und
$R^2$ für eine der folgenden Gruppen steht

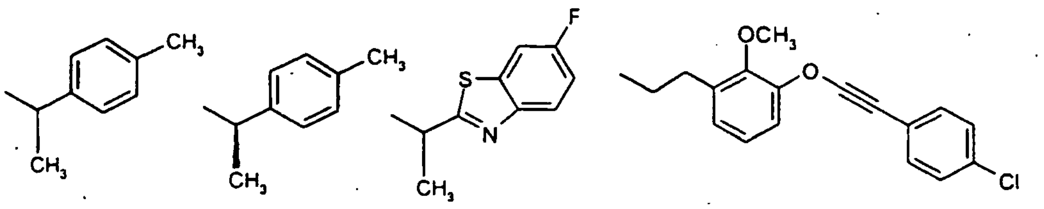

und Phosphonsäure oder ein Phosphonat der Formel II,

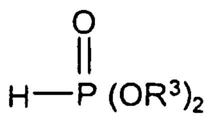

(II)

wobei

$R^3$ gleich oder verschieden für H, $^1/_n M^{n+}$, oder $(C_1\text{-}C_4)$-Alkyl und
M für ein Kation steht;

und Folpet der Formel (III)

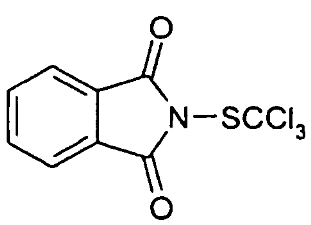

(III).

2. Wirkstoffkombination gemäß Anspruch 1, in welcher das Valinamid-Derivat der Formel (I) Iprovalicarb ist.

3. Wirkstoffkombination gemäß Anspruch 1, in welcher das Valinamid-Derivat der Formel (I) Benthiavalicarb ist.

4. Wirkstoffkombinationen gemäß einem oder mehreren der Ansprüche 1 bis 3, in welcher die Verbindungen der Formel II,
$HP(O)(OH)_2$, $HP(O)(OH)(OK)$, $HP(O)(OK)_2$, $HP(O)(OC_2H_5)(ONa)$ oder $[H P(O)(OC_2H_5)O]_3$ Al ist.

**5.** Wirkstoffkombination gemäß Anspruch 4, in welche die Verbindung der Formel II [H $P(O)(OC_2H_5)O]_3$ Al (Fosetyl-Al) ist.

**6.** Wirkstoffkombination gemäß einem oder mehreren der Ansprüche 1 bis 5, wobei das Gewichtsverhältnis von (I) : (II) : (III) zwischen 1 : 100 : 50 und 1 : 2,5 : 1,5 liegt.

**7.** Verfahren zur Bekämpfung von phytopathogenen. Pilzen, wobei man eine Wirkstoffkombination gemäß einem oder mehreren der Ansprüche 1 bis 6 auf die Pilze und/oder deren Lebensraum ausbringt.

**8.** Verwendung einer Wirkstoffkombination gemäß einem oder mehreren der Ansprüche 1 bis 6 zur Bekämpfung von phytopathogenen Pilzen.

**9.** Fungizides Mittel, enthaltend eine Wirkstoffkombination nach einem oder mehreren der Ansprüche 1 bis 6 neben Streckmitteln und/oder oberflächenaktive Stoffen.

**10.** Verfahren zur Herstellung von fungiziden Mitteln, **dadurch gekennzeichnet, dass** man die Wirkstoffe der Wirkstoffkombinationen gemäß einem oder mehreren der Ansprüche 1 bis 6 mit Streckmitteln und/oder oberflächenaktiven Stoffen vermischt.

**Claims**

**1.** Active-compound combination comprising a valinamide derivative of the formula (I)

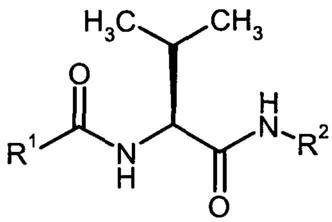

(I)

in which

$R^1$ is isopropoxy or methylsulphonyl and
$R^2$ is one of the following groups

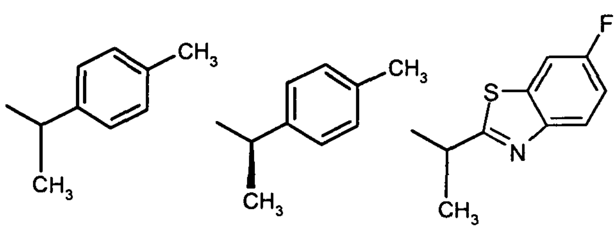

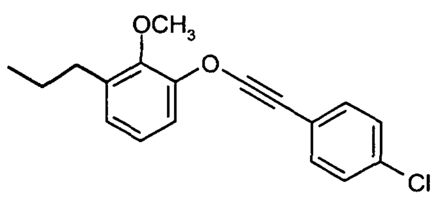

and phosphonic acid or a phosphonate of the formula II

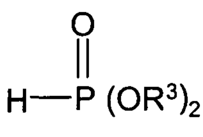

(II)

where

$R^3$ is identical or different each time and is H, $^1/_nM^{n+}$ or ($C_1$-$C_4$)-alkyl and
M is a cation,

and folpet of the formula (III)

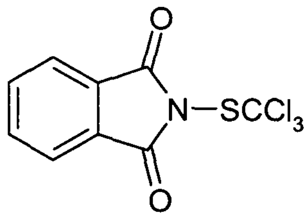

(III).

2. Active-compound combination according to Claim 1, wherein the valinamide derivative of the formula (I) is iprovalicarb.

3. Active-compound combination according to Claim 1, wherein the valinamide derivative of the formula (1) is benthiavalicarb.

4. Active-compound combinations according to one or more of Claims 1 to 3, wherein the compound of the formula (II) is $HP(O)(OH)_2$, HP(O)(OH)(OK), $HP(O)(OK)_2$, $HP(O)(OC_2H_5)(ONa)$ or $[HP(O)(OC_2H_5)O]_3$ A1.

5. Active-compound combination according to Claim 4, wherein the compound of the formula II is $[HP(O)(OC_2H_5)O]_3$ Al (fosetyl-Al).

6. Active-compound combination according to one or more of Claims 1 to 5, wherein the weight ratio of (I) : (II) : (III) is between 1 : 100 : 50 and 1 : 2.5 : 1.5.

7. Method of controlling phytopathogenic fungi, wherein an active-compound combination according to one or more of Claims 1 to 6 is delivered to the fungi and/or their habitat.

8. Use of an active-compound combination according to one or more of Claims 1 to 6 for controlling phytopathogenic fungi.

9. Fungicidal composition comprising an active-compound combination according to one or more of Claims 1 to 6 in addition to extenders and/or surface-active substances.

10. Process for preparing fungicidal compositions, **characterized in that** the active compounds of the active-compound combinations according to one or more of Claims 1 to 6 are mixed with extenders and/or surface-active substances.

**Revendications**

1. Combinaison de substances actives, contenant
un dérivé de valinamide de formule (I)

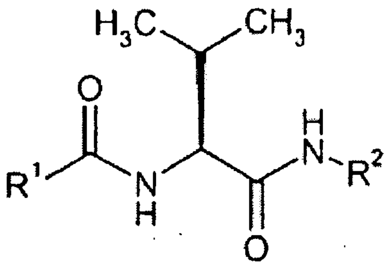

(I)

dans lequel

$R^1$ représente un groupe isopropoxy ou méthylsulfonyle et
$R^2$ représente l'un des groupes suivants :

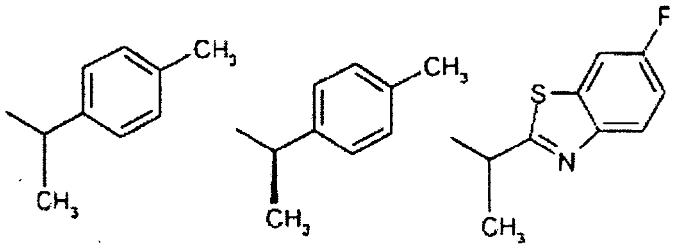

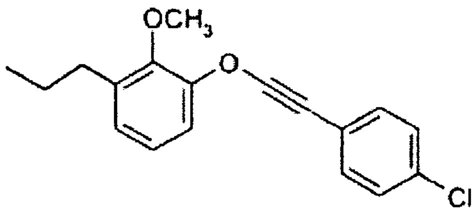

et de l'acide phosphonique ou un phosphonate de formule II,

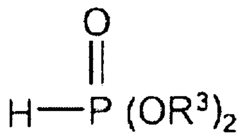

(II)

dans laquelle

$R^3$ a des valeurs identiques ou différentes et représente H, $^1/_nM^{n+}$ ou un groupe alkyle en $C_1$ à $C_4$, et
M représente un cation ;

et du folpet du formule (III)

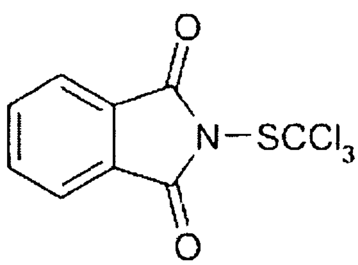

(III).

**2.** Combinaison de substances actives suivant la revendication 1, dans laquelle le dérivé de valinamide de formule (I) est l'iprovalicarbe.

3. Combinaison de substances actives suivant la revendication 1, dans laquelle le dérivé de valinamide de formule (I) est le benthiavalicarbe.

4. Combinaisons de substances actives suivant l'une ou plusieurs des revendications 1 à 3, dans lesquelles les composés de formule II sont représentés par
$HP(O)(OH)_2$, $HP(O)(OH)(OK)$, $HP(O)(OK)_2$, $HP(O)(OC_2H_5)(ONa)$ ou $[HP(O)(OC_2H_5)O]_3Al$.

5. Combinaison de substances actives suivant la revendication 4, dans laquelle le composé de formule II est $[HP (O)(OC_2H_5)O]_3Al$ (fosétyl-Al).

6. Combinaison de substances actives suivant l'une ou plusieurs des revendications 1 à 5, dans laquelle le rapport en poids des composés (I):(II):(III) se situe entre 1:100:50 et 1:2,5:1,5.

7. Procédé pour combattre des champignons phytopathogènes, dans lequel on épand une combinaison de substances actives suivant l'une ou plusieurs des revendications 1 à 6 sur les champignons et/ou sur leur milieu.

8. Utilisation d'une combinaison de substances actives suivant l'une ou plusieurs des revendications 1 à 6 pour combattre des champignons phytopathogènes.

9. Composition fongicide, contenant une combinaison de substances actives suivant l'une ou plusieurs des revendications 1 à 6, à côté de diluants et/ou d'agents tensioactifs.

10. Procédé de préparation de compositions fongicides, **caractérisé en ce qu'**on mélange les substances actives des combinaisons de ces substances selon l'une ou plusieurs des revendications 1 à 6 avec des diluants et/ou des agents tensioactifs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 472996 A
- EP 610764 A
- EP 944318 A
- WO 00030440 A
- WO 00045638 A
- WO 9637494 A
- WO 9825923 A


### In der Beschreibung aufgeführte Nicht-Patentliteratur


- **S.R. COLBY.** Calculating Synergistic and Antagonistic Responses of Herbicide Combinations. *Weeds,* 1967, vol. 15, 20-22
- *Neth. J. Plant Path.,* 1964, vol. 70, 73-80